# EUROPÄISCHE PATENTSCHRIFT

(11) **EP 1 213 171 B1**
(45) Veröffentlichungstag und Bekanntmachung des Hinweises auf die Patenterteilung: **18.10.2006**
(21) Anmeldenummer: 01126258.1
(22) Anmeldetag: 06.11.2001
(51) Int. Cl.: B60J 7/22, B60H 1/24

(54) **Windschott-Anordnung für offene Kraftfahrzeuge**
Wind barrier device for open vehicles
Dispositif pare-vent pour véhicule ouvert

(30) Priorität: 08.12.2000 DE 10061027
(43) Veröffentlichungstag der Anmeldung: 12.06.2002
(73) Patentinhaber: Bayerische Motoren Werke Aktiengesellschaft, 80809 München (DE)
(72) Erfinder: Engel, Jochen, 56626 Andernach-Kell (DE); Schlenz, Dieter, Dr., 82288 Kottgeisering (DE); Hoeppler, Robert, Dr., 85123 Karlskron (DE)

(56) Entgegenhaltungen:
- DE-A- 19 908 497
- DE-C- 19 908 499
- DE-C- 19 908 500
- DE-U- 9 201 474
- FR-A- 2 630 056
- US-A- 5 137 326

## Beschreibung

Die Erfindung bezieht sich auf eine Vorrichtung der im Oberbegriff des ersten Anspruchs genannten Art.

Eine gattungsbildende Anordnung eines Windschotts beschreibt die DE 199 08 499C. Daraus ist es bekannt, an einem Windschott eine Heizeinrichtung und Luftausströmer vorzusehen, die in Richtung auf den Nackenbereich der auf den Vordersitzen eines Cabriolet oder Roadster sitzenden Passagiere gerichtet sind.

Bei dieser Anordnung ist es kaum möglich, dass beim Fahren aufgrund des Fahrtwindes und seiner Verwirbelungen eine gezielte Anströmung des Nackenbereiches der Passagiere erfolgt. Wird ein Gebläse verwendet, so muss eine relativ hohe Gebläseleistung installiert sein, damit auch bei höheren Geschwindigkeiten ein gezielter Luftzug in den Nackenbereich der Passagiere gelangt.

Aus der DE 199 08 500 C ist es deshalb bekannt, eine Gebläseanordnung mit einer Heizeinrichtung direkt an jeder Kopfstütze der vorderen Fahrzeugsitze bei einem Cabriolet oder Roadster anzuordnen. Diese Anordnung ist aufgrund des Gebläses sehr großvolumig und deshalb nicht leicht zu integrieren. Darüber hinaus bedingt diese Anordnung bei einer weiteren Ausgestaltung, dass die beiden Fahrzeugsitze, zumindest deren Rückenlehnen, sich in einer Ebene befinden, da andernfalls die vorgeschlagene Anordnung nicht befestigt werden kann.

Aufgabe der vorliegenden Erfindung ist es, hier Abhilfe zu schaffen und eine Windschott-Anordnung für offene Kraftfahrzeuge mit einer Heizeinrichtung vorzusehen, mit der der Nackenbereich der auf den Frontsitzen sitzenden Passagiere gezielt erwärmt werden kann.

Diese Aufgabe wird erfindungsgemäß durch die kennzeichnenden Merkmale des ersten Anspruchs gelöst.

Diese Lösung basiert auf dem Grundgedanken, dass die Heizeinrichtung mit dem Gebläse am Windschott verbleibt und dass der Luftausströmer direkt am Fahrzeugsitz befestigt wird. Damit können Luftverwirbelungen, die im Fahrbetrieb unvermeidlich auftreten, die erwärmte Luft nicht verwirbeln. Sie wird direkt in den Nackenbereich des Passagieres geleitet. Auch können mit dieser Anordnung problemlos unterschiedliche Stellungen der Fahrzeugsitze und/oder Neigungen der Sitzlehnen bedient werden, da es hierfür nur erforderlich ist, die Verbindungsleitung zwischen der Luftausströmöffnung und der Heizeinrichtung elastisch verformbar auszugestalten.

Vorteilhafterweise wird die Luftausströmöffnung zwischen der Unterkante der Kopfstütze und der Oberkante der Rückenlehne befestigt. Dies ist insbesondere dann vorteilhaft, wenn die Kopfstütze einseitig auskragend an der Rückenlehne gehalten ist.

Nach weiteren Ausgestaltungen der Erfindung kann in der Luftaustrittsöffnung in üblicher Weise Horizontal- und oder Vertikal-Lamellen angeordnet werden oder ein Schwenkkopf, der diese Lamellen trägt. Weiterhin ist es genauso gut möglich, jede Luftaustrittsöffnung mit Verschlusselementen zu versehen.

Nach einer weiteren Ausgestaltung der Erfindung ist es denkbar, die Luftaustrittsöffnung direkt in die Rückenlehne in Form einer Klappe oder eines Grills zu integrieren und dann bei Bedarf nur die Verbindungsleitung zur Heizeinrichtung an die Rückenlehne anzuflanschen. Somit kann die Luftausströmöffnung problemlos in die Rückenlehne des Sitzes integriert werden, was eine besonders ergonomische Lösung darstellt.

Im folgenden wird die Erfindung anhand eines bevorzugten Ausführungsbeispiels näher erläutert. Es stellen dar:
- Figur 1a - c: Eine erste Ausführungsform der Erfindung in Seiten-, Drauf- und Frontansicht;
- Figur 2: eine erste Alternative der Erfindung;
- Figur 3a, b: eine erste Ausgestaltung der Luftausströmer in Seiten- und Draufsicht;
- Figur 4a, b: eine Seitenansicht und eine Draufsicht einer zweiten Ausgestaltung der Luftausströmer;
- Figur 5a - c: eine dritte Ausgestaltung der Luftausströmer in Seiten-, Drauf- und Vorderansicht;
- Figur 6a, b: eine erste Ausgestaltung der Befestigung der Luftausströmer;
- Figur 7a, b: eine zweite Ausgestaltung der Befestigungsanordnung für Luftausströmer;
- Figur 8: eine dritte Ausgestaltung der Befestigung für Luftauströmer;
- Figur 9: eine Seitenansicht einer weiteren Ausgestaltung.

In allen Abbildungen ist die Erfindung schematisiert erläutert. Hierbei ist eine Sitz-. lehne eines nicht näher dargestellten Fahrzeugsitzes mit 1, seine zugehörige Kopfstütze mit 2, ein Windschott mit 3, eine Heizeinrichtung mit Gebläse mit 4, 5 und ein Luftausströmer mit 6 bezeichnet. Mit 7 ist die Verbindungsleitung zwischen der Heizeinrichtung 4 und dem Gebläse 5 einerseits und dem Luftausströmer 6 andererseits bezeichnet.

Wie aus den Figuren 1a bis 1c ersichtlich ist, ist das an sich bekannte Windschott 3 in üblicher Weise in einem nicht näher dargestellten Fahrzeug angeordnet. Das Windschott 3 besteht aus einem im wesentlichen vertikal verlaufenden ersten Netz 3.1 und einem im wesentlichen horizontal verlaufenden Netz 3.2, das in entsprechenden Rahmen gehalten ist und so angeordnet wird, dass der Kopfstützenbereich der Vordersitzes eines Cabriolets oder Roadsters abgedeckt sind. Dadurch werden in an sich bekannter Weise Wirbelbildungen im Kopfbereich und im Rückenbereich der auf den Vordersitzen sitzenden Passagiere vermindert.

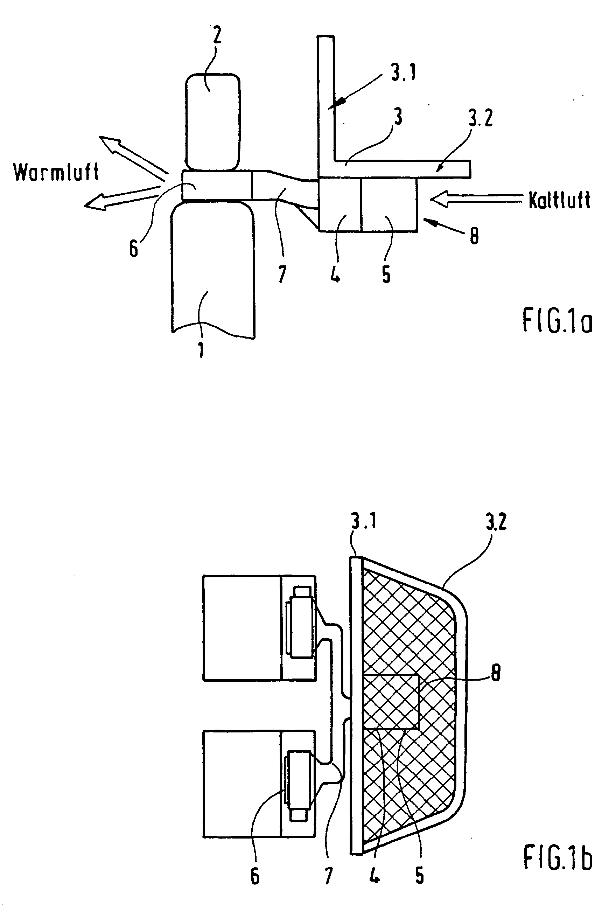

Wie Figur 1b zeigt, ist unterhalb des horizontal angeordneten Netzes 3.2 des Windschotts 3 eine vorzugsweise elektrische Heizeinrichtung 4 mit einem Gebläse 5 zu einer Baueinheit zusammengefasst angeordnet. Das Gebläse saugt Kaltluft (Umgebungsluft) bei 8 an, fördert es durch die Heizung 4 und drückt die erwärmte Luft über die Verbindungsleitung 7 zu einem Luftausströmer 6, der zwischen der Oberkante der Sitzlehne 1 und der Unterkante der Kopfstütze 2 angeordnet ist.

Hierbei teilt sich die Verbindungsleitung 7, um die Luftausströmer an den beiden Vordersitzen zu bedienen.

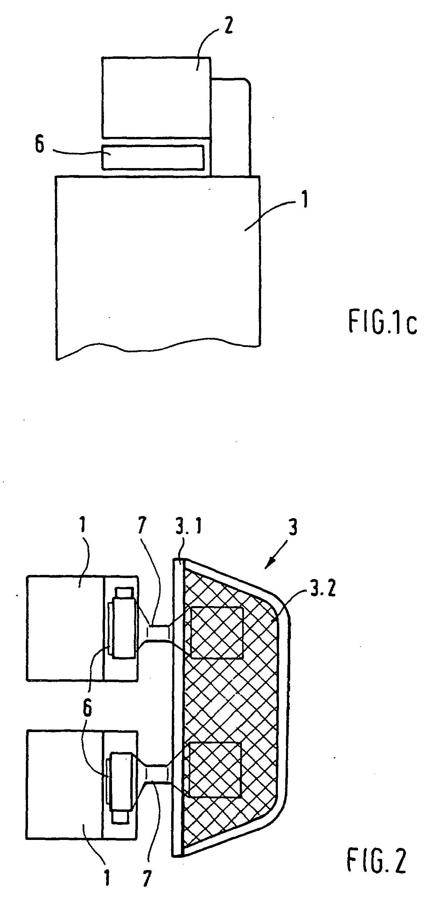

Eine derartige Anordnung ist besonders dann vorteilhaft, wenn die Kopfstütze einseitig auskragend an der Sitzlehne gehalten ist, wie Figur 1c zeigt.

Mit dieser Anordnung wird sichergestellt, dass die Warmluft direkt in den Nackenbereich der Passagiere geleitet wird und dementsprechend auch bei Fahren mit höheren Geschwindigkeiten den Nackenbereich der Passagiere mit Warmluft umspült. Damit wird selbst bei niedrigen Umgebungstemperaturen ein sommerliches Fahrgefühl vermittelt.

Die Ausgestaltung nach Figur 2 unterscheidet sich von der Ausgestaltung nach Figur 1 dadurch, dass an dem Windschott 3 für jeden Sitz eine separate Heizeinrichtung mit Gebläse vorgesehen ist.

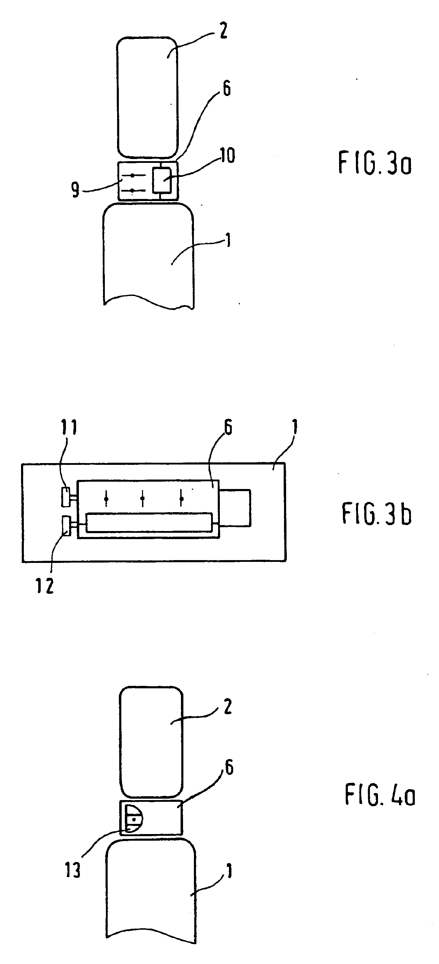

Die Figuren 3 bis 5 zeigen verschiedene Ausgestaltungen der Luftausströmer 6. Allgemein sollte sie einen möglichst großen Öffnungsquerschnitt aufweisen, damit keine hohen Luftgeschwindigkeiten, die wieder als unangenehm empfunden werden können, auftreten. Zum Lenken der Luftströmung weisen die Luftausströmer 6 nach Figur 3a, b horizontal und vertikal ausgerichtete Lamellen 9 und 10 auf, die jeweils über ein seitlich angeordnetes Verstellrad 11 und 12 eingestellt werden können. Damit ist es möglich, die Luftströmung zu lenken. Auch eine derartige Anordnung ist besonders dann vorteilhaft, wenn die Kopfstütze auskragend an der Sitzlehne 1 befestigt ist.

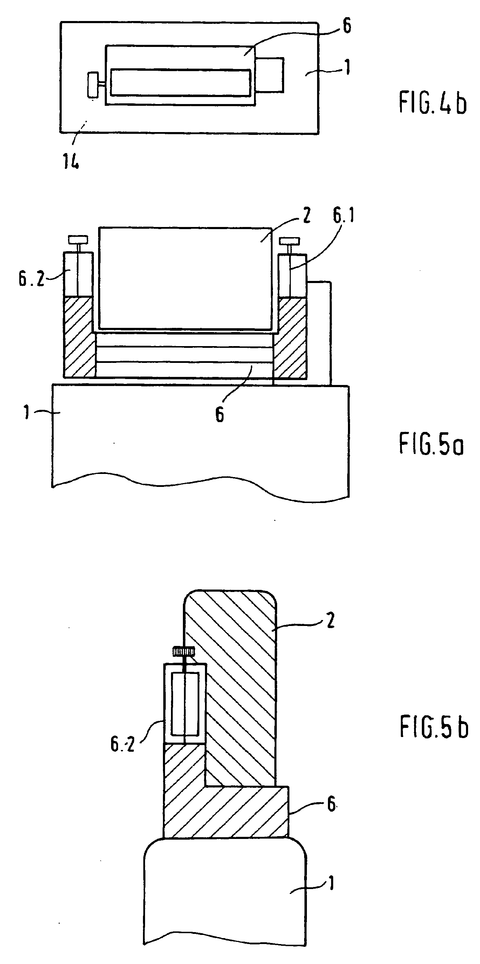

Die Anordnung gemäß Figur 4 unterscheidet sich von der Anordnung gemäß Figur 3 dadurch, dass in dem Luftausströmer 6 ein Schwenkkopf 13 vorgesehen ist, der um eine horizontal angeordnet Achse verschwenkt werden kann, so dass die Vertikallamellen aus Figur 3 entfallen können. Dementsprechend ist der Schwenkkopf 13 nur mit Horizontal-Lamellen ausgerüstet. Bedient werden die Lamellen sowie der Schwenkkopf wiederum über ein Verstellrad 14, das seitlich aus dem Gehäuse der Luftausströmöffnung herausragt (Figur 4b).

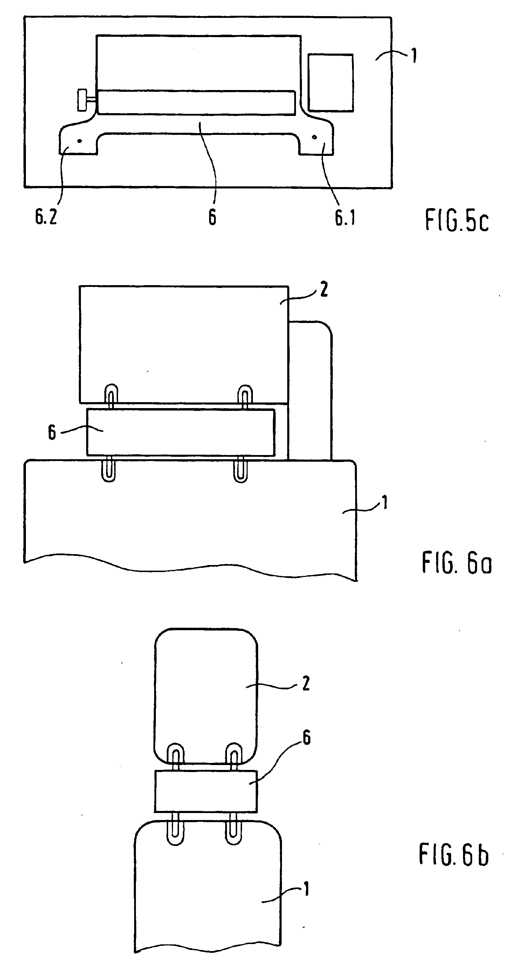

Figur 5a bis c zeigt eine weitere Ausgestaltung. Neben dem horizontal angeordneten breiten Luftausströmer 6 sind seitlich neben der Kopfstütze 2 weitere Luftausströmer 6.1 und 6.2 angeordnet, um Luft gezielt zum Kopfbereich des auf dem Sitz sitzenden Passagieres zu leiten. Dementsprechend weisen diese Luftausströmer 6.1 und 6.2 auch Lamellen zum Führen der Luft auf. Bei dem Luftausströmer 6 kann es sich hierbei um eine Ausgestaltung gemäß den Figuren 3 oder 4 handeln.

Entsprechende Verstellräder befinden sich seitlich an dem Gehäuse der Lufteinströmer 6 bzw. oberhalb des Gehäuses der Luftausströmer 6.1 und 6.2.

In den folgenden Figuren 6 bis 8 werden verschiedene Befestigungsmöglichkeiten für die Luftausströmer 6 an der Sitzlehne 1 und der Kopfstütze 2 vorgestellt. Grundidee hierbei ist es, dass bei Nichteinbau des Windschottes 3 die gesamte Heizeinrichtung 4 mit Gebläse 5 und die Luftausströmer 6 mit der Verbindungsleitung 7 vom Fahrzeug entfernt wird. Dementsprechend muss der Luftausströmer 6 an der Sitzlehne 1 und der Kopfstütze 2 befestigt werden.

Eine erste Möglichkeit, die nicht dargestellt ist, besteht darin, bei einer höhenverstellbaren Kopfstütze den Luftausströmer 6 zwischen der Kopfstütze und der Sitzlehne einzuklemmen. Daneben können - wie in Figur 6a, b gezeigt, Arretierstifte vorgesehen werden, die in entsprechenden Aufnahmeöffnungen in der Sitzlehne und in der Kopfstütze einrasten.

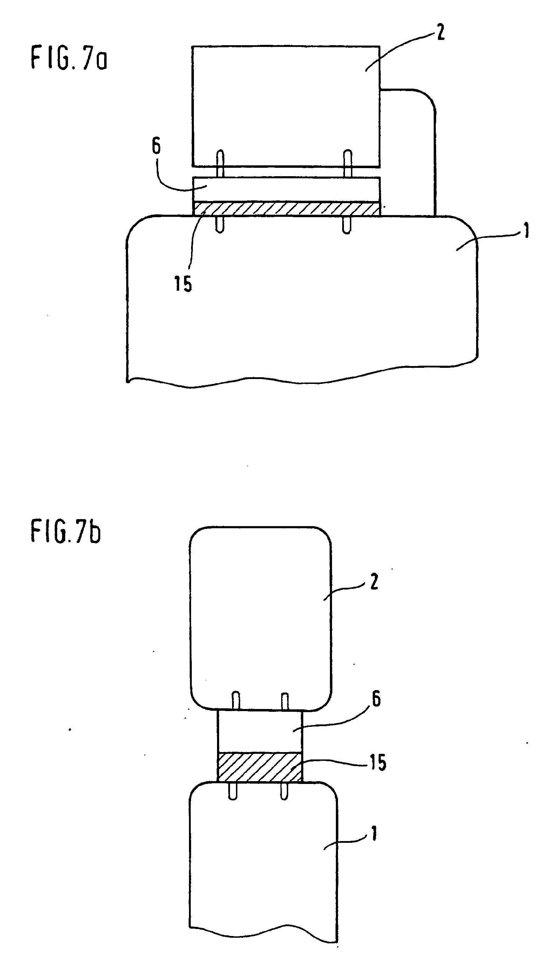

In Figur 7a, b ist eine Anordnung für eine höhenverstellbare Kopfstütze gezeigt, bei der der Luftausströmer 6 an der Kopfstütze 2 befestigt ist. Zwischen dem Luftausströmer 6 und der Oberkante der Rückenlehne 1 ist ein Distanzelement 15 vorgesehen, um den Spalt zu überbrücken.

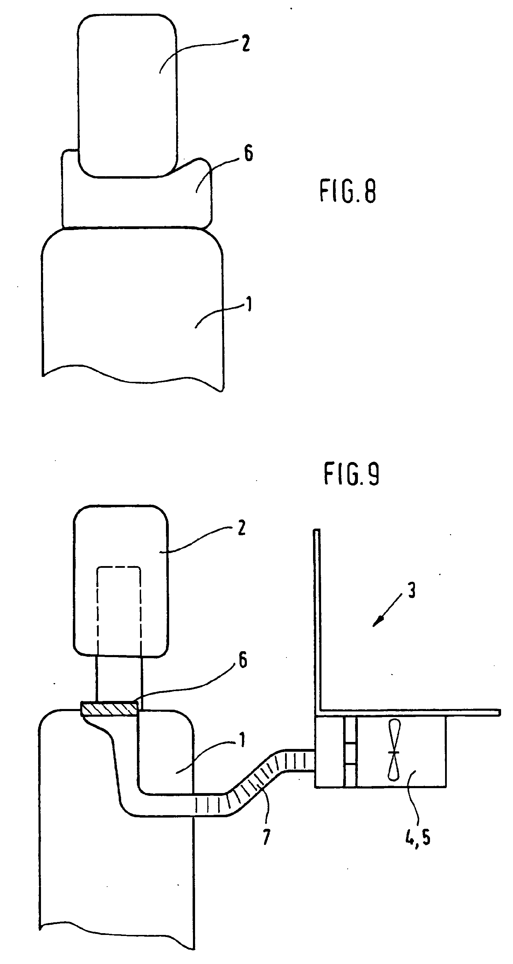

Bei der Anordnung gemäß Figur 8 besteht der Luftausströmer 6 aus einem elastisch verformbaren Material, dessen Abmessungen größer sind als der Spalt zwischen der Kopfstütze 2 und der Oberkante der Sitzlehne 1. Dementsprechend kann das Gehäuse des Luftausströmers 6 in diesen Spalt eingeklemmt werden und sich entsprechend der Spaltengröße elastisch verformen. Hierbei können dann auch Höhenverstellungen der Kopfstütze ausgeglichen werden.

In Figur 9 ist eine weitere Alternative der Erfindung dargestellt. Anstelle von separaten Luftausströmern 6 ist hier der Luftausströmer in die Sitzlehne 1 integriert und weist beispielsweise einen an der Oberkante der Sitzlehne angeordneten, versenkbar ausgestalteten Luftausströmer auf.

Die Verbindungsleitung 7 zwischen der Heizeinrichtung 4 und dem Gebläse 5 einerseits und dem Luftausströmer 6 andererseits wird dann an einer auf der Rückseite der Sitzlehne angeordneten Eintrittsöffnung angeschlossen. Diese Eintrittsöffnung ist bevorzugt versenkt angeordnet und kann durch eine nicht näher dargestellte Klappe verschlossen werden, wenn kein Windschott im Fahrzeug angebracht ist.

Allen Ausführungsbeispielen ist gemeinsam, dass die Verbindungsleitung 7 aus einem elastischen Material besteht, damit sichergestellt ist, dass alle Bewegungen des Sitzes und der Sitzlehne mitgemacht werden können, ohne dass das Verbindungsrohr an seinen Anschlussstellen abgleitet.

## Patentansprüche

1. Windschott-Anordnung für offene Kraftfahrzeuge, wie Roadster oder Cabriolet, deren in einer Fahrgastzelle aufgenommene, nebeneinander angeordnete Fahrzeugsitze (1) für Fahrer und Beifahrer jeweils eine Rückenlehne mit Kopfstütze (2) aufweisen, wobei die Windschott-Anordnung aus einem im wesentlichen vertikal ausgerichteten, den Kopfstützenbereich hinter den Fahrzeugsitzen für Fahrer und Beifahrer überdeckenden ersten Netz (3.1) und aus einem im wesentlichen horizontal ausgerichteten, den Raum zwischen dem ersten Netz und der Rückwand der Fahrgastzelle abdeckenden zweiten Netz (3.2) besteht, mit einer an dem Windschott angeordneten Heizeinrichtung (4) mit Gebläse (5), deren Luftausströmer (6) in den Nacken-/Kopfbereich der vor dem Windschott sitzenden Personen gerichtet ist,
**dadurch gekennzeichnet, dass** der Luftausströmer (6) an jedem vor dem Windschott gelegenen Fahrzeugsitz direkt angeordnet ist und über eine Verbindungsleitung (7) mit der Heizeinrichtung (4) verbunden ist.

2. Windschott-Anordnung nach Anspruch 1,
**dadurch gekennzeichnet, dass** der Luftausströmer (6) zwischen Rückenlehnen-Oberkante und Unterkante der zugehörigen Kopfstütze (2) angeordnet ist.

3. Windschott-Anordnung nach Anspruch 1 oder 2,
**dadurch gekennzeichnet, dass** der Luftausströmer (6) mit Luftleiteinrichtungen (9, 10) versehen ist.

4. Windschott-Anordnung mit einem einseitig an denen Rückenlehnen gehaltenen Kopfstützen nach einem der vorangegangenen Ansprüche,
**dadurch gekennzeichnet, dass** der Luftausströmer (6) seitlich angeordnete Bedienelemente (11, 12) für die Einstellung der Luftleiteinrichtung aufweist.

5. Windschott-Anordnung nach einem der vorangegangenen Ansprüche,
**dadurch gekennzeichnet, dass** die Luftleiteinrichtung aus einem Schwenkkopf (13) mit Horizontal-Lamellen besteht.

6. Windschott-Anordnung nach einem der vorangegangenen Ansprüche,
**dadurch gekennzeichnet, dass** der Luftausströmer (6) aus einem horizontal verlaufenden ersten Luftausströmer (6) und mindestens einem vertikal verlaufenden zweiten Luftausströmer (6.1, 6.2) besteht.

7. Windschott-Anordnung nach einem der vorangegangenen Ansprüche,
**dadurch gekennzeichnet, dass** der Luftausströmer (6) in der Oberkante der Rückenlehne (1) integriert ist.

8. Windschott-Anordnung nach einem der vorangegangenen Ansprüche,
**dadurch gekennzeichnet, dass** die Verbindungsleitung (7) aus flexiblem Material besteht.

9. Windschott-Anordnung nach einem der vorangegangenen Ansprüche,
**dadurch gekennzeichnet, dass** die Verbindungsleitung (7) an der Rückenlehne (1) arretierbar ist.

10. Windschott-Anordnung mit einer auskragend befestigten Kopfstütze an der Rückenlehne nach einem der vorangegangenen Ansprüche,
**dadurch gekennzeichnet, dass** der Luftausströmer (6) in dem Freiraum zwischen der Kopfstütze (2) und der Oberkante der Rückenlehne (1) eingeklemmt ist.

11. Windschott-Anordnung nach einem der vorangegangenen Ansprüche,
**dadurch gekennzeichnet, dass** an der Kopfstütze (2) und an der Oberkante der Rückenlehne (1) Halteelemente für den Luftausströmer (6) vorgesehen sind.

12. Windschott-Anordnung mit einer höhenverstellbaren Kopfstütze nach einem der vorangegangenen Ansprüche,
**dadurch gekennzeichnet, dass** der Luftausströmer (6) an der Kopfstütze (2) befestigt ist.

13. Windschott-Anordnung nach einem der vorangegangenen Ansprüche,
**dadurch gekennzeichnet, dass** zwischen der Unterkante des Luftausströmers (6) und der Oberkante der Rückenlehne (1) den Abstand verschließende Distanzelemente vorgesehen sind.

## Claims

1. A windshield arrangement for open vehicles such as roadsters or convertibles, wherein the driver's and passenger's seats (1) disposed side by side in a passenger compartment each comprise a back rest and head rest (2), wherein the windshield arrangement comprises a first substantially vertical net (3.1) covering the head rest region behind the driver's and passenger's seats and a substantially horizontal second net (3.2) covering the space between the first net and the back wall of the passenger compartment, with a heater (4) and fan (5) disposed on the windshield and with an air outlet (6) directed towards the neck and head region of the persons sitting facing the windshield,
**characterised in that** the air outlet (6) is disposed directly on each seat facing the windshield and is connected to the heater (4) by a pipe (7).

2. A windshield arrangement according to claim 1, **characterised in that** the air outlet (6) is disposed between the top edge of the back rest and the bottom edge of the associated head rest (2).

3. A windshield arrangement according to claim 1 or claim 2, **characterised in that** the air outlet (6) comprises air guide means (9, 10).

4. A windshield arrangement comprising a head rest on one side of the back rests according to any of the preceding claims,
**characterised in that** the air outlet (6) has lateral operating elements (11, 12) for adjusting the air guide device.

5. A windshield arrangement according to any of the preceding claims,
**characterised in that** the air guide device comprises a swivel head (13) and horizontal slats.

6. A windshield arrangement according to any of the preceding claims,
**characterised in that** the air outlet (6) comprises a first horizontal air outlet (6) and at least one vertical second air outlet (6.1, 6.2).

7. A windshield arrangement according to any of the preceding claims,
**characterised in that** the air outlet (6) is incorporated in the top edge of the back rest (1).

8. A windshield arrangement according to any of the preceding claims,
**characterised in that** the connecting pipe (7) is made of flexible material.

9. A windshield arrangement according to any of the preceding claims,
**characterised in that** the connecting pipe (7) is lockable to the back rest (1).

10. A windshield arrangement comprising a projecting head rest fastened to the back rest according to any of the preceding claims,
**characterised in that** the air outlet (6) is clamped in the space between the head rest (2) and the top edge of the back rest (1).

11. A windshield arrangement according to any of the preceding claims,
**characterised in that** retaining elements for the air outlet (6) are provided on the head rest (2) and on the top edge of the back rest (1).

12. A windshield arrangement comprising a vertically adjustable head rest according to any of the preceding claims,
**characterised in that** the air outlet (6) is fastened to the head rest (2).

13. A windshield arrangement according to any of the preceding claims,
**characterised in that** spacer elements closing the interval are provided between the bottom edge of the air outlet (6) and the top edge of the back rest (1).

## Revendications

1. Dispositif pare-vent pour véhicules découverts, tels que des roadsters ou des cabriolets, dont les sièges (1) du conducteur et du passager, disposés l'un à côté de l'autre dans un habitacle, présentent chacun un dossier avec appui-tête (2), le dispositif pare-vent comprenant
un premier filet (3.1) orienté sensiblement verticalement et recouvrant la zone d'appui-tête derrière les sièges ainsi que d'un deuxième filet (3.2) orienté sensiblement horizontalement et formant housse sur l'espace ménagé entre le premier filet et la paroi arrière de l'habitacle, et un dispositif de chauffage (4) disposé contre le pare-vent avec un ventilateur (5) dont le système de refoulement d'air (6) est dirigé sur la nuque/tête des personnes assises devant le pare-vent,
**caractérisé en ce que**
le système de refoulement d'air (6) est disposé directement sur chaque siège placé devant le pare-vent et est relié au dispositif de chauffage (4) par une ligne de raccordement (7).

2. Dispositif pare-vent selon la revendication 1,
**caractérisé en ce que**
le système de refoulement d'air (6) est disposé entre le bord supérieur du dossier et le bord inférieur de l'appui-tête correspondant (2).

3. Dispositif pare-vent selon la revendication 1 ou 2,
**caractérisé en ce que**
le système de refoulement d'air (6) est muni de dispositifs d'orientation (9, 10).

4. Dispositif pare-vent comprenant un appui-tête maintenu d'un seul côté contre le dossier selon l'une des revendications précédentes,
**caractérisé en ce que**
le système de refoulement d'air (6) présente des éléments de manoeuvre (11, 12) latéraux pour le réglage du dispositif d'orientation de l'air.

5. Dispositif pare-vent selon l'une des revendications précédentes,
**caractérisé en ce que**
le dispositif d'orientation de l'air est composé d'une tête pivotante (13) ayant des lamelles horizontales.

6. Dispositif pare-vent selon l'une des revendications précédentes,
**caractérisé en ce que**
le système de refoulement d'air (6) est composé d'un premier système horizontal (6) et d'au moins un deuxième système vertical (6.1, 6.2).

7. Dispositif pare-vent selon l'une des revendications précédentes,
**caractérisé en ce que**
le système de refoulement d'air (6) est intégré dans le bord supérieur du dossier (1).

8. Dispositif pare-vent selon l'une des revendications précédentes,
**caractérisé par**
la ligne de raccordement (7) en matériau souple.

9. Dispositif pare-vent selon l'une des revendications précédentes,
**caractérisé en ce que**
la ligne de raccordement (7) peut être bloquée contre le dossier (1).

10. Dispositif pare-vent comprenant un appui-tête fixé en saillie sur le dossier selon l'une des revendications précédentes,
**caractérisé en ce que**
le système de refoulement d'air (6) est coincé dans l'espace libre entre l'appui-tête (2) et le bord supérieur du dossier (1).

11. Dispositif pare-vent selon l'une des revendications précédentes,
**caractérisé en ce que**
des éléments de retenue pour le système de refoulement d'air (6) sont prévus sur l'appui-tête (2) et sur le bord supérieur du dossier (1).

12. Dispositif pare-vent comprenant un appui-tête réglable en hauteur selon l'une des revendications précédentes,
**caractérisé en ce que**
le système de refoulement d'air (6) est fixé à l'appui-tête (2).

13. Dispositif pare-vent selon l'une des revendications précédentes,
**caractérisé en ce que**
des éléments d'écartement sont prévus pour obturer la distance entre le bord inférieur du système de refoulement d'air (6) et le bord supérieur du dossier (1).
